# EUROPEAN PATENT APPLICATION

(11) **EP 3 225 506 A1**
(43) Date of publication of application: **04.10.2017**
(21) Application number: 17162210.3
(22) Date of filing: 22.03.2017
(51) Int. Cl.: B62D 5/00, F16C 39/02

(54) **STEERING DEVICE**

(30) Priority: 29.03.2016 JP 2016066907
(71) Applicant: Showa Corporation, Gyoda City Saitama 361-8506 (JP)
(72) Inventor: SEKIKAWA, Shinsuke, Haga-gun, Tochigi, 321-3325 (JP)
(74) Representative: Nordmeyer, Philipp Werner

(57) **Abstract**

A steering device includes a clutch (30) and a wheel-turning shaft. The clutch includes an input shaft (105), an output shaft, a planetary gear mechanism (33), a housing (21), and a restriction member (51). The planetary gear mechanism is coupled to each of the input shaft and the output shaft. The housing is configured to accommodate the planetary gear mechanism and at least part of the output shaft. The restriction member is secured to the housing or constitutes part of the housing. The restriction member is opposed to an outer surface of the output shaft through a gap so as to restrict inclination of the output shaft. The wheel-turning shaft is configured to be displaced in accordance with rotation of the output shaft so as to turn wheels (400) of a vehicle.

## Description

### BACKGROUND OF THE INVENTION

### FIELD OF THE INVENTION

The present invention relates to a steering device.

### DISCUSSION OF THE BACKGROUND

Japanese Unexamined Patent Application Publication No. 2008-189077 discloses a clutch generally used for a Steer-By-Wire (SBW) steering system. The clutch switches between mechanically coupling and uncoupling a motive power transmission path between a steering member and a wheel-turning shaft.

The clutch disclosed in Japanese Unexamined Patent Application Publication No. 2008-189077 includes a planetary gear mechanism in which an input shaft is coupled to an internal gear, and an output shaft is coupled to a carrier. When a sun gear is locked, the input shaft and the output shaft are mechanically coupled to transmit rotation of the input shaft to the output shaft.

### SUMMARY OF THE INVENTION

According to one aspect of the present invention, a steering device includes a clutch and a wheel-turning shaft. The clutch includes an input shaft, an output shaft, a planetary gear mechanism, a housing, and a restriction member. The planetary gear mechanism is coupled to each of the input shaft and the output shaft.

The housing is configured to accommodate the planetary gear mechanism and at least part of the output shaft. The restriction member is secured to the housing or constitutes part of the housing. The restriction member is opposed to an outer surface of the output shaft through a gap so as to restrict inclination of the output shaft. The wheel-turning shaft is configured to be displaced in accordance with rotation of the output shaft so as to turn wheels of a vehicle.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
FIG. 1 is a diagram schematically illustrating a configuration of essential components of a steering device according to one embodiment;
FIG. 2 is a cross-sectional view of the steering device according to this embodiment;
FIGs. 3A and 3B are diagrams schematically illustrating an exemplary configuration of a clutch according to this embodiment, of which FIG. 3A illustrates a state in which the clutch is disengaged, and FIG. 3B illustrates a state in which the clutch is engaged;
FIGs. 4A and 4B are diagrams schematically illustrating another exemplary configuration of the clutch according to this embodiment, of which FIG. 4A illustrates a state in which the clutch is disengaged, and FIG. 4B illustrates a state in which the clutch is engaged;
FIG. 5 is a diagram schematically illustrating a restriction member according to this embodiment and components surrounding it; and
FIG. 6 is an enlarged view of a portion VI in FIG. 5.

### DESCRIPTION OF THE EMBODIMENTS

The embodiments will now be described with reference to the accompanying drawings, wherein like reference numerals designate corresponding or identical elements throughout the various drawings.

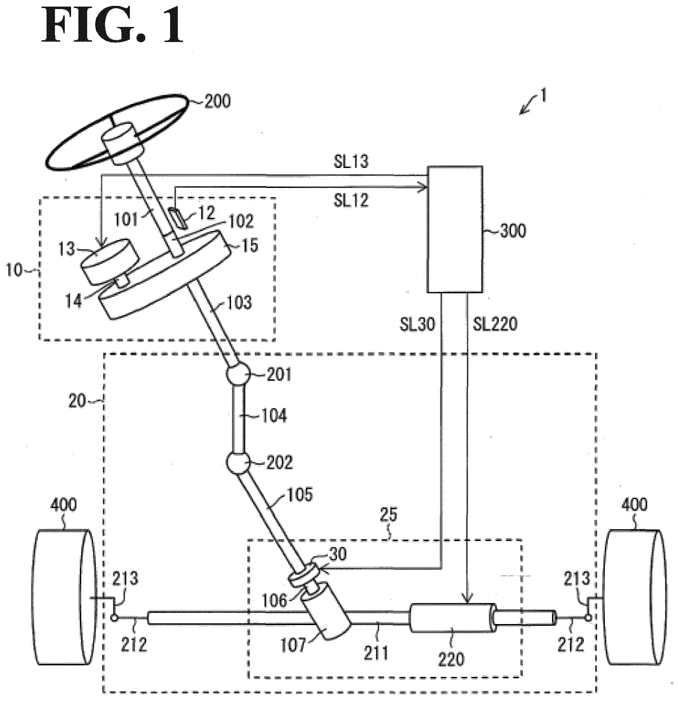

A steering device according to one embodiment will now be described with reference to FIG. 1. FIG. 1 is a diagram schematically illustrating a configuration of essential components of the steering device 1 according to this embodiment. As illustrated in FIG. 1, the steering device 1 includes a steering unit 10, a wheel-turning unit 20, a steering member 200, and a controller 300. The steering device 1 is used for turning wheels 400 in accordance with the driver's steering operation through the steering member 200.

The steering device 1 according to this embodiment is a steer-by-wire steering device, which has at least two functions, namely a function of mechanically coupling or uncoupling a torque transmission path between the steering member 200 and the wheel-turning unit 20, and a function of electrically controlling a turning angle of the wheels 400 in accordance with a steering operation through the steering member 200 in a state in which the torque transmission path is uncoupled.

As illustrated in FIG. 1, a steering wheel having a wheel shape is taken as an example of the steering member 200. This, however, should not limit this embodiment. A device having other shape and mechanism may be used insofar as the device is capable of accepting a steering operation by the driver.

### Steering Unit 10

The steering unit 10 has both a function of accepting the driver's steering operation through the steering member 200 and a function of mechanically coupling or uncoupling the torque transmission path between the steering member 200 and the wheel-turning unit 20. Also, the steering unit 10 has a function of generating reaction force with respect to the steering operation and transmitting the reaction force to the steering member 200.

As illustrated in FIG. 1, the steering unit 10 includes an upper steering shaft 101, an intermediate steering shaft 102, a lower steering shaft 103, a torque sensor 12, a motive power generator 13, a motive power transmission shaft 14, and a motive power transmitter 15.

In this description, the upper steering shaft 101, the intermediate steering shaft 102, and the lower steering shaft 103 will be occasionally referred to as "steering shaft" collectively.

Also, in this description, "upper end" will refer to an end portion on the upstream side in the transmission path of steering force in accordance with a steering operation by the driver (namely, an end on the input side) while "lower end" will refer to an end portion on the downstream side in the transmission path of steering force (namely, an end on the output side).

In this embodiment, an upper end of the upper steering shaft 101 is coupled to the steering member 200 in a torque transmittable manner. In this description, "coupled in a torque transmittable manner" refers to coupling of a first member to a second member in such a manner that the second member rotates in accordance with rotation of the first member. For example, its signification at least includes a case where the first member and the second member are integral to each other, a case where the second member is directly or indirectly secured to the first member, and a case where the first member and the second member are coupled to each other through a component such as a joint in such a manner that the first member and the second member operate in conjunction with each other.

In this embodiment, the upper end of the upper steering shaft 101 is secured to the steering member 200 in such a manner that the steering member 200 and the upper steering shaft 101 integrally rotate.

The upper steering shaft 101 and the intermediate steering shaft 102 are coupled to each other in a torque transmittable manner and elastically. The torque sensor 12 detects torsion caused between the upper steering shaft 101 and the intermediate steering shaft 102.

Specifically, the upper steering shaft 101 and the intermediate steering shaft 102 each have a cavity inside although not illustrated. A torsion bar is disposed in the cavities to elastically couple the upper steering shaft 101 and the intermediate steering shaft 102. When the driver performs a steering operation through the steering member 200, a torsion angle *θ_{T}* is caused between the upper steering shaft 101 and the intermediate steering shaft 102 in accordance with the magnitude of a torque T of the steering operation. Then, the torque sensor 12 detects this torsion angle *θ_{T}* and outputs to the controller 300 a torque sensor signal SL12 indicating a detection result. It is noted that the steering unit 10 may include a steering angle sensor to detect a steering angle of the steering member 200, for example, so as to output to the controller 300 a signal indicating a steering angle or a steering angle speed detected.

The motive power generator 13 applies a torque to the motive power transmission shaft 14 in accordance with a torque control signal SL13 output from the controller 300.

In a non-limiting embodiment, the motive power generator 13 may be a motor main body, and the motive power transmission shaft 14 may be a motor output shaft that penetrates the motor main body and is rotated by the motor main body. The motive power transmission shaft 14 may be another shaft coupled to the motor output shaft in a torque transmittable manner.

The motive power transmitter 15 is coupled to the motive power transmission shaft 14 in a torque transmittable manner with respect to the motive power transmission shaft 14. The motive power transmitter 15 is coupled to the intermediate steering shaft 102 in a torque transmittable manner.

The motive power transmitter 15 is a motive power transmission mechanism to transmit torque between the motive power transmission shaft 14 and the intermediate steering shaft 102. As the motive power transmitter 15, for example, gear-drive, belt-drive, chain-drive, friction-drive, and traction-drive motive power transmission mechanisms or a combination of these motive power transmission mechanisms may be used. The gear-drive motive power transmission mechanism may include, for example, helical gears, planetary gears, and a combination of a worm gear and a worm wheel. The friction-drive motive power transmission mechanism and the traction-drive motive power transmission mechanism may include, for example, planetary rollers. The motive power transmitter 15 may not necessarily include reduction gears.

With the above-described configuration, the torque generated by the motive power generator 13 is transmitted to the intermediate steering shaft 102 through the motive power transmission shaft 14 and the motive power transmitter 15.

### Controller 300

The controller 300 controls wheel-turning force generated by a wheel-turning force generator 220 and torque generated by the motive power generator 13 in accordance with a steering operation by the driver.

Specifically, referring to the torque sensor signal SL12 output from the torque sensor 12, the controller 300 generates the torque control signal SL13 for controlling the torque generated by the motive power generator 13 and a wheel-turning force control signal SL220 for controlling the wheel-turning force generated by the wheel-turning force generator 220. The controller 300 respectively outputs the torque control signal SL13 and the wheel-turning force control signal SL220 to the motive power generator 13 and the wheel-turning force generator 220.

The controller 300 may further refer to such signals as a signal indicating a steering angle of the steering member 200 and a vehicle speed signal from a vehicle speed sensor so as to generate the torque control signal SL13 and the wheel-turning force control signal SL220.

The controller 300 outputs the clutch control signal SL30 to the clutch 30 so as to control switching between a coupled state and an uncoupled state of the clutch 30.

When the clutch 30 is in the uncoupled state, the controller 300 controls the motive power generator 13 to generate a reaction force with respect to a steering operation by the driver. Specifically, the controller 300 controls the motive power generator 13 to transmit to the steering shaft a reaction force torque in a reverse direction to the driver's steering torque input through the steering member 200. This enables the driver to obtain a tactile response to the steering operation.

The specific control method of the clutch 30 by the controller 300 should not limit this embodiment. For example, the controller 300 may be arranged to switch the clutch 30 to the coupled state in such an occasion as when some malfunction occurs in the steering device 1 and at the time of ignition off. With this configuration, at the time of occurrence of malfunction and ignition off, it is possible for the driver to turn the wheels 400 even without passing through an electric path.

When the clutch 30 is in the coupled state, the controller 300 may be arranged to control the motive power generator 13 in such a manner that torque in the same direction as the driver's steering torque input through the steering member 200 is transmitted to the steering shaft. Thus, even in the coupled state of the clutch 30, it is possible for the driver to perform the steering operation without requiring large force.

### Wheel-Turning Unit 20

The wheel-turning unit 20 is arranged to turn the wheels 400 in accordance with a steering operation by the driver which has been accepted by the steering unit 10.

As illustrated in FIG. 1, the wheel-turning unit 20 includes a first universal joint 201, an intermediate shaft 104, a second universal joint 202, an input shaft (input shaft) 105, the clutch 30, a pinion shaft (output shaft) 106, a pinion gear 107, a rack shaft (wheel-turning shaft) 211, tie rods 212, knuckle arms 213, and the wheel-turning force generator 220.

A downstream side of the input shaft 105, the clutch 30, the pinion shaft 106, the pinion gear 107, part of the rack shaft 211, and the wheel-turning force generator 220 are accommodated in a pinion box 25. In this embodiment, the pinion shaft 106 includes a single member. This configuration, however, should not be construed in a limiting sense. The pinion shaft 106 may include a plurality of members.

An upper end of the intermediate shaft 104 is coupled to a lower end of the lower steering shaft 103 through the first universal joint 201 in a torque transmittable manner.

A lower end of the intermediate shaft 104 is coupled to an upper end of the input shaft 105 through the second universal joint 202 in a torque transmittable manner.

The pinion gear 107 is coupled to a lower end of the pinion shaft 106 in a torque transmittable manner with respect to the pinion shaft 106. Specifically, the pinion gear 107 is secured to the pinion shaft 106 to make the pinion shaft 106 and the pinion gear 107 integrally rotate.

In this embodiment, a rack to mesh with the pinion gear 107 is formed on a portion of the rack shaft 211 that is opposed to the pinion gear 107.

In this embodiment, the clutch 30 is coupled to a lower end of the input shaft 105. The clutch 30 switches between mechanically coupling and uncoupling the torque transmission path between the steering member 200 and the wheel-turning unit 20 in accordance with a clutch control signal SL30 output from the controller 300. Specifically, the clutch 30 switches between mechanically coupling and uncoupling torque transmission between the lower end of the input shaft 105 and the upper end of the pinion shaft 106 in accordance with the clutch control signal SL30.

In this embodiment, when the clutch 30 is in the coupled state, the driver's steering operation through the steering member 200 causes the pinion gear 107 to rotate to displace the rack shaft 211 in the axial direction.

Meanwhile, when the clutch 30 is in the uncoupled state, the wheel-turning force generator 220 generates wheel-turning force in accordance with the wheel-turning force control signal SL220 from the controller 300 so as to displace the rack shaft 211 in the axial direction.

When the rack shaft 211 is displaced in the axial direction, the wheels 400 are turned through the tie rods 212 on both ends of the rack shaft 211 and the knuckle arms 213 coupled to the tie rods 212. The present invention, however, should not be limited to the configuration in which the wheel-turning shaft is displaced by the rack pinion mechanism. The wheel-turning shaft may be displaced by other mechanisms (such as a ball screw mechanism).

It is noted that the specific configuration of the wheel-turning force generator 220 should not limit this embodiment. The wheel-turning force generator 220 may have the following configuration, for example.

### Wheel-Turning Force Generator 220

The wheel-turning force generator 220 may include a motor (not illustrated) and a conversion mechanism to convert rotation of the output shaft of the motor into linear movement of the rack shaft 211 in the axial direction. What is called a ball screw mechanism may be used as the conversion mechanism. The ball screw mechanism includes, for example, a nut (not illustrated), a rack-shaft helical groove (not illustrated), and a plurality of rolling balls (not illustrated). The nut has an inner surface in which a nut helical groove is formed. The nut is rotated by the motor. The rack-shaft helical groove is formed in an outer surface of the rack shaft 211 and has the same pitch as the nut helical groove. The plurality of rolling balls are clamped between the nut helical groove and the helical groove of the rack shaft 211.

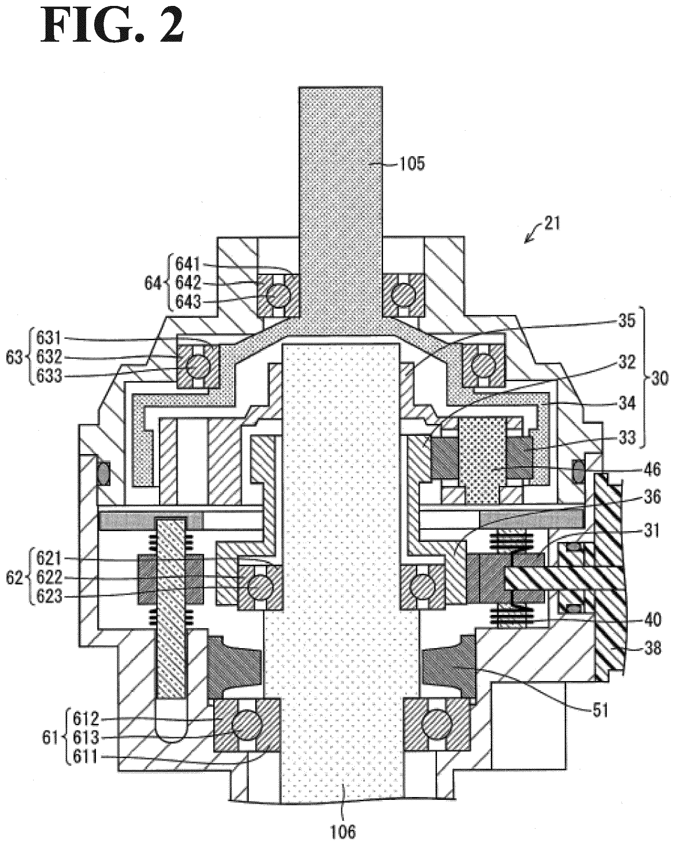

Next, by referring to FIG. 2, a configuration of the clutch 30 and components surrounding it will be described in detail. FIG. 2 is a cross-sectional view of an internal configuration of the clutch 30 and the components surrounding it.

As illustrated in FIG. 2, the housing 21 accommodates part of the input shaft 105, part of the pinion shaft 106, the clutch 30, a restriction member 51, a first bearing 61, a second bearing 62, a third bearing 63, and a fourth bearing 64. The first bearing 61, the second bearing 62, the third bearing 63, the fourth bearing 64, and the restriction member 51 are each secured to the housing 21. The housing 21 constitutes part of the pinion box 25. The housing 21 may further accommodate part of the rack shaft 211. In the following description, the restriction member 51 is what is called a lock screw for positioning the first bearing 61.

The clutch 30 includes a planetary gear mechanism including a sun gear 32, planetary gears 33, an internal gear 34, and a carrier 35. The sun gear 32 is disposed on an outer circumferential side of the pinion shaft 106 and coupled to a lock wheel 36 in a torque transmittable manner. The planetary gears 33 are disposed on an outer circumferential side of the sun gear 32 and on an inner circumferential side of the internal gear 34 so as to mesh with the sun gear 32 and the internal gear 34. The internal gear 34 is coupled to the input shaft 105 in a torque transmittable manner. The carrier 35 is coupled to the pinion shaft 106 in a torque transmittable manner and supports each of the planetary gears 33 in such a manner that the planetary gear 33 can rotate on its own axis and revolve.

In this embodiment, the housing 21 further includes a lever 31. The lever 31 is displaced between a first position and a second position. In this embodiment, when a plunger (not illustrated) is pressed against the lever 31 by a function of a solenoid 38 connected to the housing 21, the lever 31 is driven and displaced to the first position to make the lever 31 separate from the lock wheel 36. Thus, the lock wheel 36 shifts to a non-fixed state. This mechanically uncouples the torque transmission path between the input shaft 105 and the pinion shaft 106. It is noted that when the lever 31 is displaced to the first position, a stopper pin (not illustrated) is brought into contact with the lever 31 and prevents the lever 31 from being further displaced.

The lever 31 is biased to the second position by a spring 40 disposed in the housing 21. When the lever 31 is displaced to the second position, the lever 31 is engaged with a groove (not illustrated) of the lock wheel 36 to fix the lock wheel 36. This mechanically couples the torque transmission path between the input shaft 105 and the pinion shaft 106.

### Restriction Member 51

The restriction member 51 is opposed to an outer surface of the pinion shaft 106 through a gap so as to restrict inclination of the pinion shaft 106. In this embodiment, the restriction member 51 is secured to the housing 21. The present invention, however, should not be limited to this configuration. The restriction member 51 may be formed of part of the housing 21, for example, insofar as the restriction member 51 can be opposed to the outer surface of the pinion shaft 106 through the gap.

### First to Fourth Bearings 61 to 64

As illustrated in FIG. 2, the first bearing 61 and the second bearing 62 each support the pinion shaft 106. Meanwhile, the third bearing 63 and the fourth bearing 64 each support the input shaft 105. The first to fourth bearings 61 to 64 will be specifically described below.

The first bearing 61 includes an inner race (shaft washer) 611, an outer race (housing washer) 612, and a plurality of rolling elements 613. The rolling elements 613 are disposed between the inner race 611 and the outer race 612. The shaft washer 611 is secured to the pinion shaft 106 to rotate with the pinion shaft 106. Meanwhile, the outer race 612 is secured to the housing 21. In this embodiment, the restriction member 51 also serves as a positioning member to determine a position of the outer race 612.

The second bearing 62 includes an inner race 621, an outer race 622, and a plurality of rolling elements 623. The rolling elements 623 are disposed between the inner race 621 and the outer race 622. The shaft washer 621 is arranged to rotate with the pinion shaft 106. Meanwhile, the outer race 622 is secured to the housing 21.

The third bearing 63 includes an inner race 631, an outer race 632, and a plurality of rolling elements 633. The rolling elements 633 are disposed between the inner race 631 and the outer race 632. The fourth bearing 64 includes an inner race 641, an outer race 642, and a plurality of rolling elements 644. The rolling elements 644 are disposed between the inner race 641 and the outer race 642. The inner races 631 and 641 are each secured to the input shaft 105. Meanwhile, the outer races 632 and 642 are each secured to the housing 21.

According to this embodiment, the above-described restriction member 51 restricts inclination of the pinion shaft 106 even if the pinion shaft 106 receives a large force from the rack shaft 211 in a direction to incline the pinion shaft 106, namely, even if a force acts on the pinion shaft 106 in a direction to deviate the axis of the pinion shaft 106. Provision of the restriction member 51 prevents the pinion shaft 106 from inclining.

Consequently, even if the first bearing 61, for example, is degraded over time, the restriction member 51 is brought into contact with the pinion shaft 106 earlier than the inner race 611 of the first bearing 61. Therefore, even if the pinion shaft 106 receives a large force from the wheel-turning unit 20 (see FIG. 1) side, the restriction member 51 reliably prevents the pinion shaft 106 from inclining.

In this embodiment, the restriction member 51 is a lock screw. The present invention, however, should not be limited to this configuration. Any member may be used insofar as it is opposed to an outer surface of the pinion shaft 106 through a gap to restrict inclination of the pinion shaft 106. The restriction member 51 may be a member secured to the housing 21 or may constitute part of the housing 21. When the restriction member 51 is what is called a lock screw, however, it is preferable because the number of components can be reduced.

In this embodiment, the output shaft of the clutch 30 is the pinion shaft 106. The present invention, however, should not be limited to this configuration. The output shaft of the clutch 30 may be coupled to the pinion shaft 106 through, for example, a joint in a torque transmittable manner. Even with this configuration, a large force may be applied to the output shaft of the clutch 30 from the wheel-turning shaft 211. It is therefore significant to provide the restriction member 51. It is noted that the restriction member 51 is particularly significant in the configuration in which the output shaft of the clutch 30 is the pinion shaft 106.

### Details of the Clutch 30

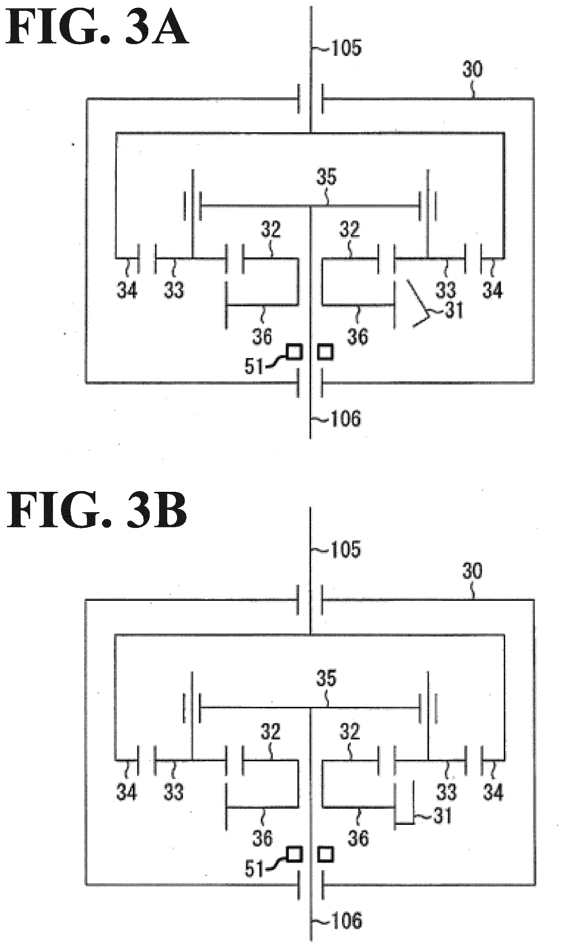

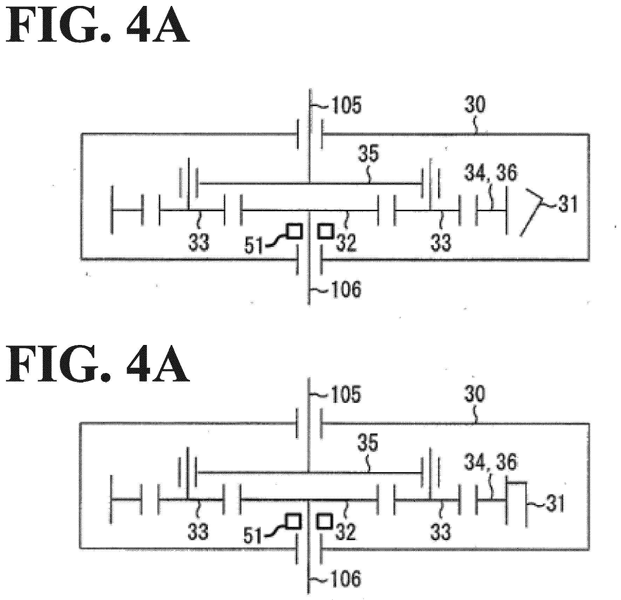

A detailed configuration of the clutch 30 will be described with reference to FIGs. 3A and 3B and FIGs. 4A and 4B. The clutch 30 includes the lever 31 displaced between the first position and the second position to mechanically couple or uncouple the torque transmission path between the steering member 200 and the wheel-turning unit 20. FIGs. 3A and 3B are diagrams schematically illustrating an exemplary configuration of the clutch 30 including the lever 31. FIG. 3A illustrates a state in which the clutch 30 is disengaged. FIG. 3B illustrates a state in which the clutch 30 is engaged.

As illustrated in FIGs. 3A and 3B, the clutch 30 includes the planetary gear mechanism, the lever 31, and the lock wheel 36. The planetary gear mechanism includes the sun gear 32, the planetary gears 33, the internal gear 34, and the carrier 35, which are disposed coaxially. The lock wheel 36 engages with the lever 31. The carrier 35 is coupled to the pinion shaft 106 in a torque transmittable manner. The internal gear 34 is coupled to the input shaft 105 in a torque transmittable manner. The sun gear 32 is coupled to the lock wheel 36 in a torque transmittable manner. The lever 31 is displaced between the first position illustrated in FIG. 3A and the second position illustrated in FIG. 3B.

In this embodiment, the number of the planetary gears 33 should not be particularly limited. The planetary gears 33 are each disposed on an outer circumference of the sun gear 32 and on an inner circumference of the internal gear 34 so as to mesh with the sun gear 32 and the internal gear 34. The carrier 35 supports each of the planetary gears 33 to make it rotate on its own axis and revolve.

According to this embodiment, as illustrated in FIG. 3A, when the lever 31 is displaced to the first position, the lever 31 is separate from the lock wheel 36, and the lock wheel 36 is in a non-locked state. This makes the sun gear 32, which is coupled to the lock wheel 36 in a torque transmittable manner, capable of idling. Then, since the sun gear 32 idles, torque is not transmitted from the carrier 35 to the internal gear 34. This mechanically uncouples the torque transmission path between the input shaft 105 and the pinion shaft 106 (namely, the torque transmission path (see FIG. 1) between the steering member 200 (see FIG. 1) and the wheel-turning unit 20 (see FIG. 1)). That is, the clutch 30 is disengaged.

Meanwhile, as illustrated in FIG. 3B, when the lever 31 is displaced to the second position, the lever 31 is engaged with a groove of the lock wheel 36, and thus, the lock wheel 36 is in a locked state. Then, the sun gear 32, which is coupled to the lock wheel 36 in a torque transmittable manner, is fixed. When the sun gear 32 is fixed, torque is transmitted from the carrier 35 to the internal gear 34. This mechanically couples the torque transmission path between the input shaft 105 and the pinion shaft 106 (namely, the torque transmission path between the steering member 200 (see FIG. 1) and the wheel-turning unit 20). That is, the clutch 30 is engaged.

In this description, the above-described term "engaged with" includes not only "caught in" and "fitted in", for example, but also simply "brought into contact with".

FIGs. 4A and 4B are diagrams schematically illustrating another exemplary configuration of the clutch 30 according to this embodiment. FIG. 4A illustrates a state in which the clutch 30 is disengaged. FIG. 4B illustrates a state in which the clutch 30 is engaged. In the exemplary configuration illustrated in FIGs. 4A and 4B, the clutch 30 includes the planetary gear mechanism and the lever 31. The planetary gear mechanism includes the sun gear 32, the planetary gears 33, the internal gear 34, and the carrier 35, which are disposed coaxially. The internal gear 34 and the lock wheel 36 are integral to each other. The carrier 35 is coupled to the intermediate steering shaft 102 in a torque transmittable manner. The sun gear 32 is coupled to the pinion shaft 106 in a torque transmittable manner.

As illustrated in FIG. 4A, when the lever 31 is displaced to the first position, the lever 31 is separate from the lock wheel 36 (internal gear 34), and the lock wheel 36 (internal gear 34) is in a non-locked state. This makes the internal gear 34 capable of idling. Since the internal gear 34 idles, torque is not transmitted from the carrier 35 to the sun gear 32. This mechanically uncouples the torque transmission path between the input shaft 105 and the pinion shaft 106 (namely, the torque transmission path between the steering member 200 (see FIG. 1) and the wheel-turning unit 20 (see FIG. 1)). That is, the clutch 30 is disengaged (non-fixed state).

Meanwhile, as illustrated in FIG. 4B, when the lever 31 is displaced to the second position, the lever 31 meshes with the lock wheel 36 (internal gear 34), and the lock wheel 36 (internal gear 34) is locked. This makes the internal gear 34 fixed (fixed state). Since the internal gear 34 is fixed, torque is transmitted from the carrier 35 to the sun gear 32. This mechanically couples the torque transmission path between the input shaft 105 and the pinion shaft 106 (namely, the torque transmission path between the steering member 200 (see FIG. 1) and the wheel-turning unit 20 (see FIG. 1)). That is, the clutch 30 is engaged.

As described above, when the lever 31 is displaced to the second position, the lever 31 is engaged with the lock wheel 36 to lock rotation of the lock wheel 36. Of three elements, namely, the sun gear 32, the carrier 35, and the internal gear 34, one element (first element) is coupled to the input shaft 105 in a torque transmittable manner, another element (second element) is coupled to the pinion shaft 106 in a torque transmittable manner, and the other element (third element) is coupled to the lock wheel 36 in a torque transmittable manner or is integral to the lock wheel 36. This suitably provides the clutch 30 to mechanically couple or uncouple the torque transmission path between the input shaft 105 and the pinion shaft 106 by displacing the lever 31 between the first position and the second position. Detailed Configuration of Restriction Member and Components Surrounding it

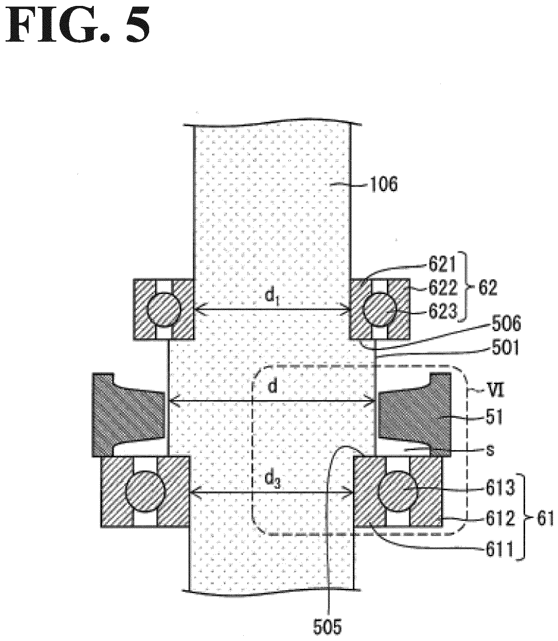

A detailed configuration of the restriction member 51 will be described with reference to FIG. 5. FIG. 5 is a diagram schematically illustrating the configuration of the restriction member 51 and components surrounding it. As illustrated in FIG. 5, the restriction member 51 is secured to the housing 21 (see FIG. 2) and disposed adjacent to the outer race 612 of the first bearing 61 in an axial direction of the pinion shaft 106. Thus, the restriction member 51 determines a position of the first bearing 61.

A gap (indicated by "S" in FIG. 5) is formed between the restriction member 51 and the inner race 611.

In this embodiment, part of the pinion shaft 106 protrudes radially outward to have a large-diameter portion 501 having a diameter larger than diameters of other adjacent parts of the pinion shaft 106. In this embodiment, when the diameter of the large-diameter portion of the pinion shaft 106 is *d*, and when the diameters of the adjacent parts of the pinion shaft 106 are *d₁* and *d₂,* relationships *d > d₁* and *d > d₂* are established.

Since the pinion shaft 106 includes the large-diameter portion 501, a first stepped portion 505 and a second stepped portion 506 are respectively formed on the pinion shaft 106 on an upstream side and a downstream side of the large-diameter portion 501. According to this embodiment, therefore, a position of the inner race 611 of the first bearing 61 is determined by the first stepped portion 505. A position of the inner race 621 of the second bearing 62 is determined by the second stepped portion 506.

The restriction member 51 is opposed to an outer surface of the large-diameter portion 501. This decreases a protruding length of the restriction member 51 from the housing 21.

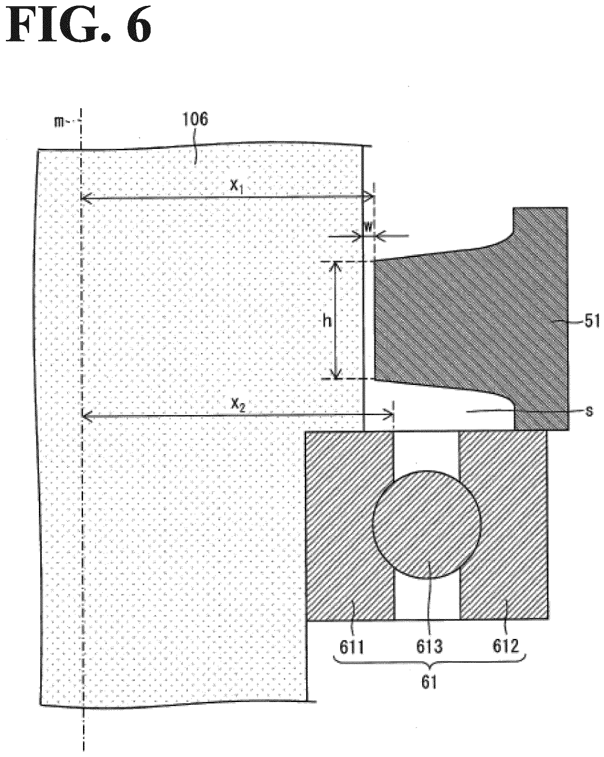

FIG. 6 is an enlarged view of a portion VI in FIG. 5. In this embodiment, in a plan view from the upstream side in the axial direction of the pinion shaft 106, the restriction member 51 extends to a position overlapping the inner race 611 of the first bearing 61. Specifically, as illustrated in FIG. 6, when the axis of the pinion shaft 106 is "m", a distance from the axis "m" to an end portion of the restriction member 51 on the pinion shaft 106 side is *x₁*, and a distance from the axis "m" to an inner end portion of the inner race 611 of the first bearing 61 is *x₂*, a relationship *x₁* < *x₂* is established.

With this configuration, the restriction member 51 can be disposed sufficiently close to the outer surface of the pinion shaft 106. Thus, the restriction member 51 can suitably restricts inclination of the pinion shaft 106. More preferably, a distance (indicated by "*w*" in FIG. 6) between the outer surface of the pinion shaft 106 and the restriction member 51 should be equal to or less than one millimeter.

In the clutch disclosed in Japanese Unexamined Patent Application Publication No. 2008-189077, when the output shaft receives a large force from the wheel-turning shaft side, the output shaft may incline. This may unfortunately hinder smooth operation of the planetary gear mechanism of the clutch, for example.

The embodiment prevents the output shaft of the clutch from inclining even if the output shaft receives a large force from the wheel-turning shaft side.

Obviously, numerous modifications and variations of the present invention are possible in light of the above teachings. It is therefore to be understood that within the scope of the appended claims, the present invention may be practiced otherwise than as specifically described herein.

## Claims

1. A steering device comprising:
a clutch comprising:
an input shaft;
an output shaft;
a planetary gear mechanism coupled to each of the input shaft and the output shaft,
a housing configured to accommodate the planetary gear mechanism and at least part of the output shaft; and
a restriction member secured to the housing or constituting part of the housing, the restriction member being opposed to an outer surface of the output shaft through a gap so as to restrict inclination of the output shaft; and
a wheel-turning shaft configured to be displaced in accordance with rotation of the output shaft so as to turn wheels of a vehicle.

2. The steering device according to claim 1,
wherein the planetary gear mechanism comprises
a sun gear,
planetary gears configured to mesh with the sun gear,
a carrier configured to rotatably support the planetary gears, and
an internal gear configured to mesh with the planetary gears,
wherein a first element among the sun gear, the carrier, and the internal gear is coupled to the input shaft in a torque transmittable manner,
wherein a second element among the sun gear, the carrier, and the internal gear is coupled to the output shaft in a torque transmittable manner, and
wherein a third element among the sun gear, the carrier, and the internal gear is switchable between a fixed state and a non-fixed state.

3. The steering device according to claim 1 or 2,
wherein the output shaft comprises a pinion shaft, and
wherein a rack to mesh with the pinion shaft is formed on the wheel-turning shaft.

4. The steering device according to any one of claims 1 to 3,
wherein the clutch further comprises a bearing comprising:
an outer race secured to the housing; and
an inner race secured to the output shaft, and
wherein the restriction member comprises a positioning member secured to the housing and disposed adjacent to the outer race in an axial direction of the output shaft so as to determine a position of the outer race.

5. The steering device according to claim 4, wherein the positioning member extends to a position overlapping the inner race in a plan view in the axial direction of the output shaft.

6. The steering device according to any one of claims 2 to 5, wherein a gap is formed between the positioning member and the inner race.

7. The steering device according to claim 1,
wherein the output shaft comprises a large-diameter portion having a diameter larger than a diameter of an adjacent portion of the output shaft, and
wherein an outer surface of the large-diameter portion is opposed to the restriction member.

8. The steering device according to claim 1, wherein a distance between an outer surface of the output shaft and the restriction member is equal to or less than one millimeter.
